# EUROPEAN PATENT APPLICATION

(11) **EP 3 989 192 A1**
(43) Date of publication of application: **27.04.2022**
(21) Application number: 20826615.5
(22) Date of filing: 17.06.2020
(51) Int. Cl.: G08B 5/00, G08B 27/00, G08B 17/00

(54) **EVACUATION GUIDANCE SYSTEM, EVACUATION GUIDANCE DEVICE, EVACUATION GUIDANCE METHOD, AND EVACUATION GUIDANCE PROGRAM**

(30) Priority: 18.06.2019 JP 2019112600
(71) Applicant: NEC Corporation, 108-8001 Tokyo (JP)
(72) Inventor: NAKAMURA, Atsushi, Tokyo 108-8001 (JP)
(74) Representative: Betten & Resch
(86) International application number: PCT/JP2020/023692
(87) International publication number: WO 2020/255992

(57) **Abstract**

To provide an evacuation guidance system that may achieve an efficient evacuation guidance. Position of persons inside a building is determined and stored as position information. In addition, in a case where a disaster under which evacuation guidance to outside the building should be provided to the persons inside is detected, an evacuation route for the persons inside is created based on the position information and a pseudo leader is generated in front of the persons inside on the evacuation route based on the position information and the evacuation route. Particularly, the pseudo leader is generated in front of a header among the persons inside on the evacuation route.

## Description

### FIELD

### (REFERENCE TO RELATED APPLICATION)

The present invention is based on the priority of Japanese patent application No. 2019-112600 (filed on June 18, 2019), the entire contents of the same application are incorporated by reference into the present application.

The present invention relates to an evacuation guidance system, an evacuation guidance apparatus, an evacuation guidance method and an evacuation guidance program. Particularly, the present invention relates to an evacuation guidance system, an evacuation guidance apparatus, an evacuation guidance method and an evacuation guidance program for quick evacuation of persons inside a building to outside.

### BACKGROUND

An illuminated exit sign, etc., which indicate a position of an evacuation door and an evacuation direction, are arranged on a facility gathering a crowd, such as a commercial building, a stadium, a hall for holding events and the like, for a purpose of quick evacuation of persons inside (i.e., victims) to outside upon occurrence of a disaster, such as a fire and the like. For a similar purpose, for example, Patent Literature 1 discloses a technology that projects an evacuation route on a wall, etc., with a projector.

### CITATION LIST

### PATENT LITERATURE

PTL: Japanese patent No. JP4010273B

### SUMMARY

### TECHNICAL PROBLEM

The following analysis is made from an aspect of the present invention. Herein, disclosure of the document cited in the Citation List is incorporated into the present application by reference.

There is a problem that a psychologically pertinent evacuation guidance cannot be achieved by only indicating an evacuation route, such as the technology disclosed in Patent Literature 1. For example, there are cases where people encountering a disaster fallen in panic upon occurrence of a disaster make an independent route determination due to unreliable feeling on the indicated evacuation route. In addition, it is also considered that the people confronted with the disaster would stray into an incorrect route due to lights out or generation of smoke, even if they intend to follow the indicated evacuation route.

Accordingly, it is a purpose of the present invention to provide an evacuation guidance system, an evacuation guidance apparatus, an evacuation guidance method and an evacuation guidance program, which contribute to achieve an efficient evacuation guidance.

### SOLUTION TO PROBLEM

According to a first aspect of the present invention, there is provided an evacuation guidance system, comprising:
a position information management apparatus that determines position of persons inside a building and manages the position as position information,
a disaster detection apparatus that detects a disaster under which an evacuation guidance should be provided to the persons inside so as to evacuate them to outside of the building,
an evacuation route creation apparatus that creates an evacuation route for the persons inside based on the position information in a case where the disaster detection apparatus detects a disaster, and
a pseudo leader generation apparatus that generates a pseudo leader in front of the persons inside on the evacuation route based on the position information and the evacuation route.

According to a second aspect of the present invention, there is provided an evacuation guidance apparatus, comprising:
a position information management part that determines position of persons inside a building and manages the position as position information,
an evacuation route creation part that creates an evacuation route for the persons inside based on the position information in a case where a disaster is detected, and
a pseudo leader generation part that generates a pseudo leader in front of the persons inside on the evacuation route based on the position information and the evacuation route.

According to a third aspect of the present invention, there is provided an evacuation guidance method, comprising:
a step of determining position of persons inside a building and managing the position as position information,
a step of creating an evacuation route for the persons inside based on the position information in a case where a disaster is detected, and
a step of generating a pseudo leader in front of the persons inside on the evacuation route based on the position information and the evacuation route.

According to a fourth aspect of the present invention, there is provided an evacuation guidance program, that causes a computer to implement:
a process of determining position of persons inside a building and managing the position as position information,
a process of creating an evacuation route for the persons inside based on the position information in a case where a disaster is detected, and
a process of generating a pseudo leader in front of the persons inside on the evacuation route based on the position information and the evacuation route.

### ADVANTAGEOUS EFFECTS OF INVENTION

According to each aspect of the present invention, there are provided an evacuation guidance system, an evacuation guidance apparatus, an evacuation guidance method and an evacuation guidance program, which may achieve efficient evacuation guidance.

### BRIEF DESCRIPTION OF DRAWINGS

Figure 1 is an explanatory view of one outline of the present invention.
Figure 2 is a diagram showing one example of information stored in a position information management apparatus 110.
Figure 3 is a diagram showing one example of a pseudo leader.
Figure 4 is a diagram showing one example of operations by a performance presentation apparatus.
Figure 5 is a diagram showing one example of handover between performance presentation apparatuses.
Figure 6 is an explanatory view of one example of evacuation guidance of a first example embodiment.
Figure 7 is an explanatory view of one example of evacuation guidance of the first example embodiment.
Figure 8 is an explanatory view of one example of evacuation guidance of the first example embodiment.
Figure 9 is an explanatory view of one example of evacuation guidance of the first example embodiment.
Figure 10 is a flowchart diagram indicating an operation flow by an evacuation guidance system 100 of the first example embodiment.
Figure 11 is a diagram showing one example of a computer as an evacuation guidance apparatus.

### MODES

A preferable example embodiment of the present invention is explained in detail while referring to drawings. Herein, symbols in the following description are expediently attached to each element as an explanatory aid for understanding, but not for limitation of the present invention to an illustrated configuration. Herein, a connection line in a circuit configuration illustrated in drawings includes bidirectional connection excepting for a case of being particularly indicated. An opposite direction is not excluded even in a case of one way arrow.

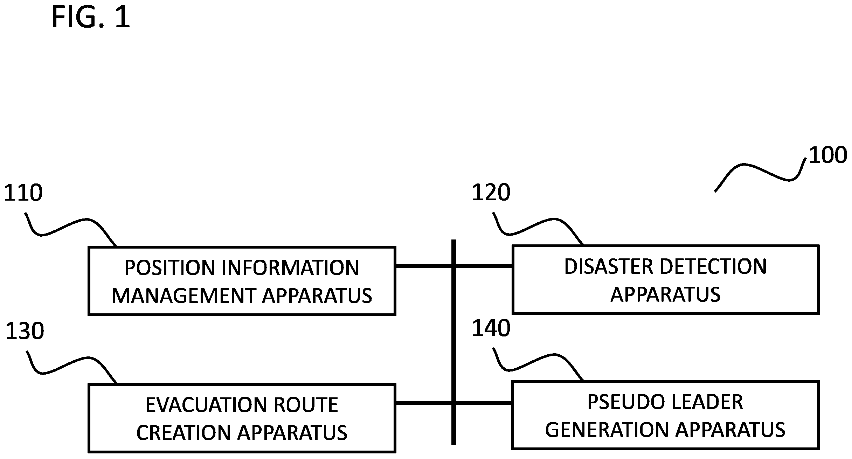

First, one outline of the present invention is explained while referring to drawings. As illustrated in Figure 1, an evacuation guidance system 100 of the present invention comprises a position information management apparatus 110, a disaster detection apparatus 120, an evacuation route creation apparatus 130 and a pseudo leader generation apparatus 140.

The position information management apparatus 110 determines position of persons inside a building (may be abbreviated as "inside") and manages the position as position information. The disaster detection apparatus 120 detects a disaster under which an evacuation guidance should be provided to the persons inside so as to evacuate them to outside of the building. The evacuation route creation apparatus 130 creates an evacuation route for the persons inside based on the position information in a case where the disaster detection apparatus 120 detects a disaster. The pseudo leader generation apparatus 140 generates a pseudo leader in front of the persons inside on the evacuation route based on the position information and the evacuation route.

Accordingly, the evacuation guidance system 100 of the present invention achieves a psychologically pertinent evacuation guidance, because the pseudo leader leads the persons inside to outside of the building. That is, only indication of an evacuation route would exert a mere "guide" effect based on a "follow-direction method". However, the present invention exerts "lead" effect based on a "follow-me method". Herein, with respect to the difference between the "follow-direction method" and the "follow-me method", please see the following literatures and the like. Simulation to follow-direction method and follow-me method at emergency evacuation https://www.media.hosei.ac.jp/bulletin_archives/vol20_11.pdf (internet search on May 20, 2019)

Action/research on evacuation guidance method under an emergency evacuation situation, Experimental Social Psychology, 1984, Vol. 23, No. 2, 107-115

https://www.jstage.jst.go.jp/article/jjesp1971/23/2/23_2_107/_pdf (internet search on May 20, 2019)

[Note, the term "lead" means to go ahead in front of followers so as to evacuate them. The term "guide" is interchangeable with "navigate" and means to provide information for evacuation.]

### [First example embodiment]

In a following first example embodiment, the evacuation guidance system 100 explained in the above outline is concretely explained. Herein, the first example embodiment is a mere exemplification, but not a limitation of the present invention to the mode explained below.

Similar to the above outline, the evacuation guidance system 100 of the first example embodiment comprises a position information management apparatus 110, a disaster detection apparatus 120, an evacuation route creation apparatus 130 and a pseudo leader generation apparatus 140.

The position information management apparatus 110 is connected to a large number of position detection apparatuses. The position detection apparatuses are apparatuses for detecting the position of persons inside a building, such as, for example, a radio communication apparatus that communicates with a device carried by the persons inside and/or a camera capturing the persons inside. The position detection apparatuses are arranged not only in a room(s), on a passage(s), in an elevator hall(s), which are usually used, but also on an emergency passage(s) and emergency steps/stairs for evacuation, etc. In addition, it is desired that the position detection apparatuses may accurately detect the position of the persons inside (preferably, to an extent of one meter or less), and thus it is considered to apply, for example, Bluetooth (Registered trademark) of Class 3, an RFID technology, a radar technology and the like. The device carried by the persons inside may be a [mobile] terminal held by each of individuals, for example, a cellular phone and the like, and an entrance card provided with an IC (Integrated Circuit) tag.

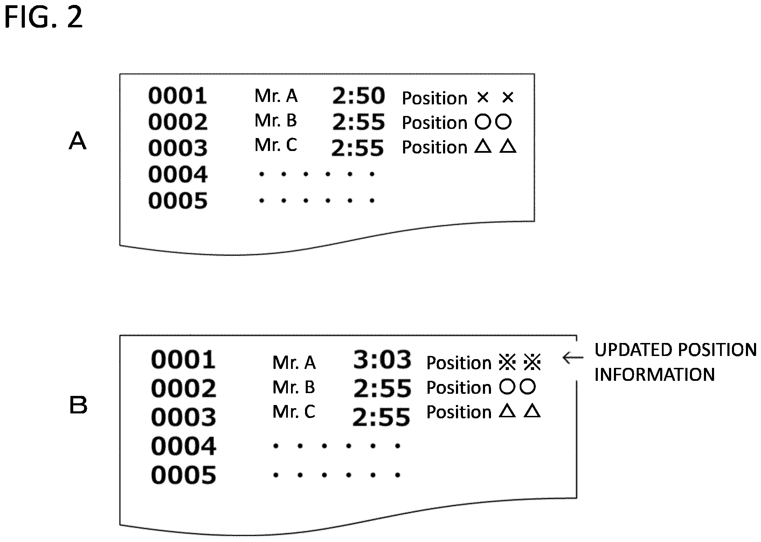

The position information management apparatus 110 determines position of persons inside a building via the position detection apparatuses and manages the position as position information. A storage part of the position information management apparatus 110 stores the position information, and the position information is updated in real-time based on information obtained via the position detection apparatuses. For example, the position information shown in Figure 2A is stored in the storage part of the position information management apparatus 110 and updated as shown in Figure 2B.

The disaster detection apparatus 120 detects a disaster under which evacuation guidance to outside of the building should be provided to the persons inside. Concretely, the disaster detection apparatus 120 comprises a sensor(s) that detects flame and smoke generated upon a fire, and transmits a detection result to the evacuation route creation apparatus 130.

The evacuation route creation apparatus 130 is realized as a computer comprising an interface, an input part, an output part, a storage part and a processing part, and connected in a communicable manner with the position information management apparatus 110, the disaster detection apparatus 120 and the pseudo leader generation apparatus 140. Particularly, the evacuation route creation apparatus 130 previously stores an evacuation route map in the storage part. In addition, the evacuation route creation apparatus 130 acquires the position information from the position information management apparatus 110 when it receives a detection result indicating occurrence of a disaster from the disaster detection apparatus 120 so as to create an evacuation route so as to avoid overlapping with the position of the disaster detection apparatus 120 that has notified the detection result.

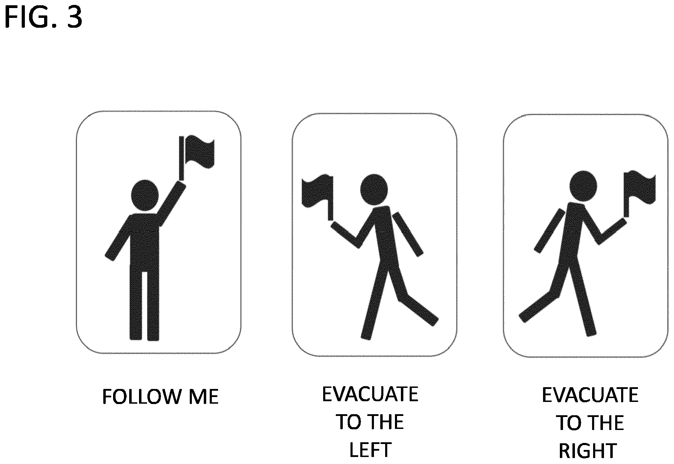

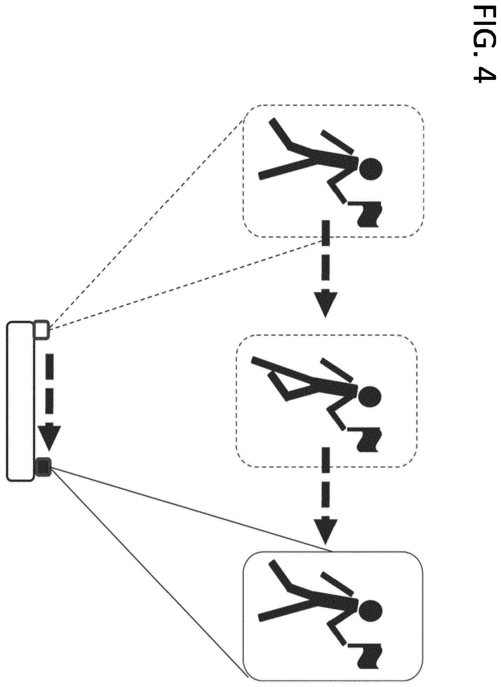

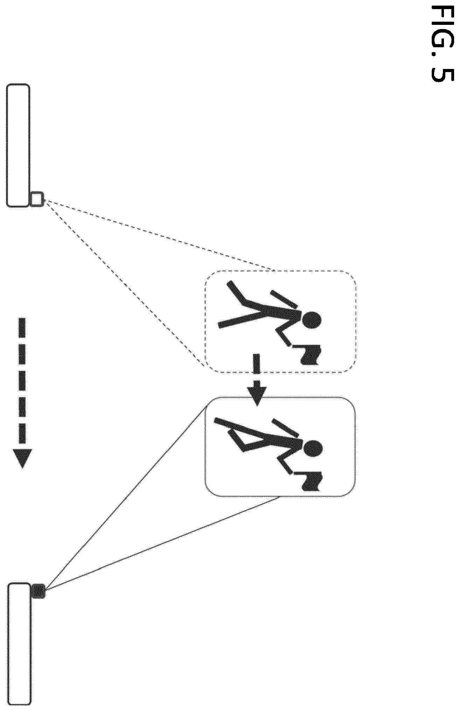

The pseudo leader generation apparatus 140 generates a pseudo leader in front of the persons inside on the evacuation route based on the position information and the evacuation route. Concretely, the pseudo leader generation apparatus 140 is connected with a large number of performance presentation apparatuses arranged at a variety of positions inside a building. The performance presentation apparatus comprises a projector, a display, a speaker and the like, and generates the pseudo leader by presenting a performance as if a real evacuation leader exists. The pseudo leader is exemplified by, for example, Figure 3 as one example, and generated by applying technologies, such as 3D hologram, projection mapping, digital signage and the like. A screen for the 3D hologram and the projection mapping is not limited to a wall or the like, and smoke or the like may be utilized. Herein, it is preferable that the pseudo leader continuously leads the persons inside to outside of the building, thus the performance presentation apparatus may be configured so that the performance presentation apparatus may move along the evacuation route and make a pan action while generating the pseudo leader as illustrated in Figure 4. In addition, a large number of performance presentation apparatuses may be switched so as to handover the generation of the pseudo leader as illustrated in Figure 5.

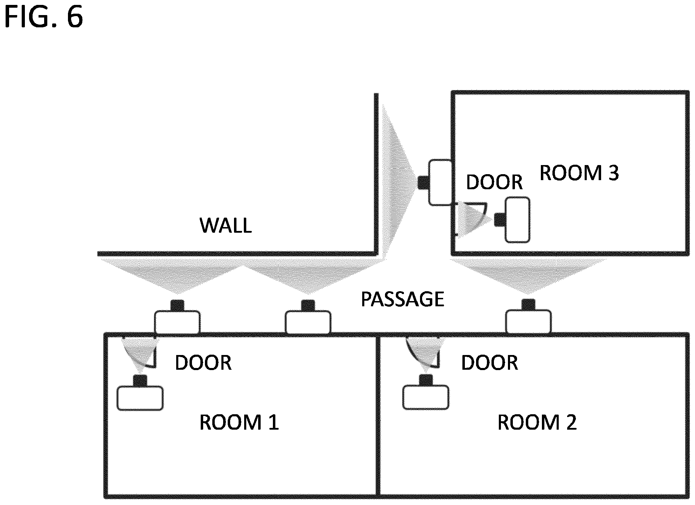

Hereinafter, a sequential flow is explained by exemplifying a situation that the evacuation guidance system 100 of the present invention is applied to a commercial building and persons being in a room 1 illustrated in Figure 6 are evacuated.

First, it is provided that, at a time point before an occurrence of disaster, the position information management apparatus 110 has determined position of persons inside a building and managed the position as position information. Herein, the determination of the position by the position information management apparatus 110 may be triggered by the occurrence of a disaster.

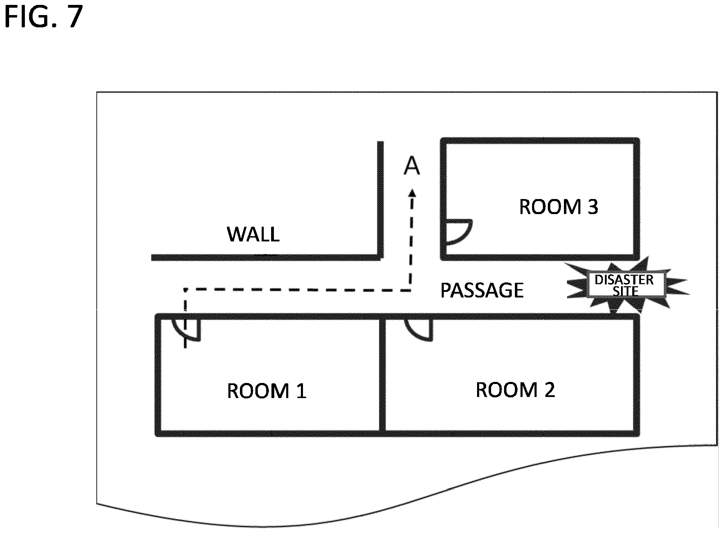

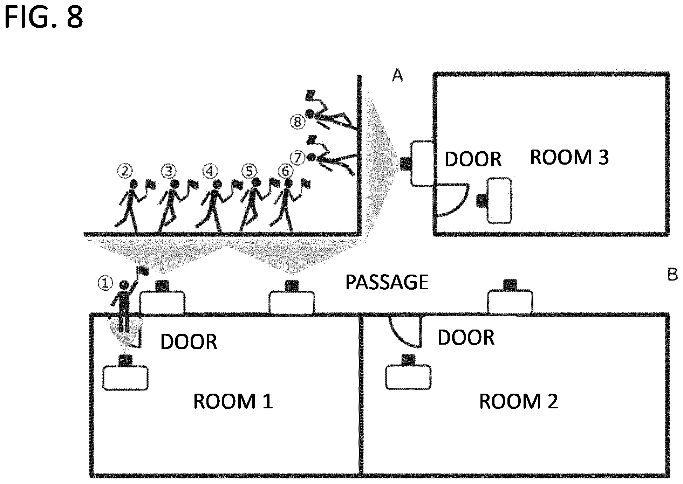

When a disaster occurs, the disaster detection apparatus 120 transmits a detection result to the evacuation route creation apparatus 130, and the evacuation route creation apparatus 130 creates an evacuation route, for example, as illustrated in Figure 7. In addition, the pseudo leader generation apparatuses 140 serially generate the pseudo leader according to the created evacuation route as illustrated in Figure 8 so as to perform evacuation guidance. Concretely, first, the pseudo leader generation apparatus 140 generates a pseudo leader via a performance presentation apparatus arranged in a ROOM 1 and evacuate the persons inside the ROOM 1 to a passage (Figure 8-1). Further, while acquiring from the position information management apparatus 110 a position of a header (heading person) of persons who goes out the room 1 and moves therefrom, the pseudo leader generation apparatus 140 continuously generates the pseudo leader in front of the header on the evacuation route so as to lead the header via the performance presentation apparatuses arranged on the passage (Figure 8-2 to 8). That is, the pseudo leader generation apparatus 140 generates the pseudo leader in accordance with the (prospective) movement of the header.

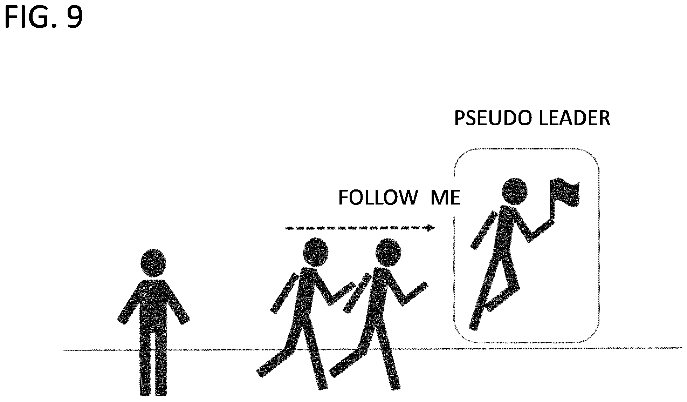

At that situation, a target of the leading performance is the header, and the performance is not provided to the followers. That is, performed is a leader who executes evacuation guidance by calling "Follow me!" to one header or several peoples, for example, as illustrated in Figure 9, but not an evacuation guide who calls "Exit is there!" while standing at a constant position. Herein, in order to perform a more real leader, an image of a walking leader may be projected or displayed, and sound of footsteps may be output. Although direct performance effect is provided on the followers, an excellent evacuation effect would be rather expected according to a comparison result of the "follow-me method" to the "follow-direction method". Therefore, it is preferable to generate the pseudo leader within a close range, for example, 1 meter, in front of the header on the evacuation route in order to exert a psychological effect based on the follow-me method, i.e., an effect of "lead" but not "guide". The distance between the header and the pseudo leader is also referred to as "visually recognizable range". A performance urging the followers to follow the header or a performance stopping persons who are making their way to an incorrect route may be further presented. In addition, a performance may be provided, in which a large number of persons make their way to a direction led by the pseudo leader, so as to exert a crowd psychological effect.

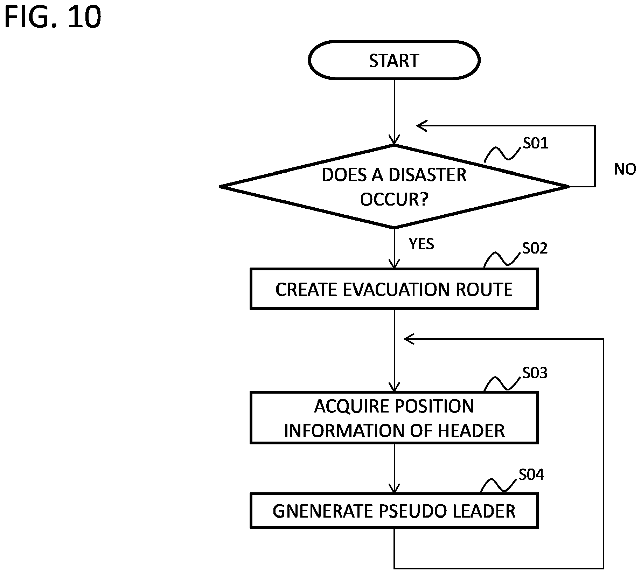

A process flow by the evacuation guidance system 100 is explained. As shown in Figure 10, in a case where a disaster occurs (step S01, YES), the evacuation route creation apparatus 130 acquires the position information of the persons inside the building and creates the evacuation route (step S02). In addition, processes are continued until the header goes outside, in which, while the pseudo leader generation apparatus 140 acquires the position information of the header (step S03), the pseudo leader is generated in front of the header on the evacuation route (step S04).

As described above, according to the evacuation guidance system 100 of the first example embodiment, the pseudo leader evacuates the persons inside to outside by leading them, thus a psychologically pertinent evacuation guidance based on the "follow-me method" may be achieved. In addition, according to the evacuation guidance system 100 of the first example embodiment, it is prevented that people encountering a disaster stray into an incorrect route since the pseudo leader leads them.

### [Example embodiment 2]

In the following example embodiment 2, variations of the evacuation guidance system 100 of the first example embodiment are explained.

Although it is explained that the position information management apparatus 110, the evacuation route creation apparatus 130 and the pseudo leader generation apparatus 140 are individual apparatuses in the evacuation guidance system 100 of the first example embodiment, these apparatuses may be configured as one integrated evacuation guidance apparatus. Herein, in the evacuation guidance apparatus, each of the apparatuses in the evacuation guidance system 100 respectively functions as the position information management part, the evacuation route creation part and the pseudo leader generation part. Herein, the position detection apparatuses, the disaster detection apparatus 120, the performance presentation apparatuses may be configured as apparatuses different from the evacuation guidance apparatus since they are arranged at a variety of positions in a facility. Herein, the position detection apparatuses, the disaster detection apparatus 120, the performance presentation apparatuses may be integrated to one apparatus.

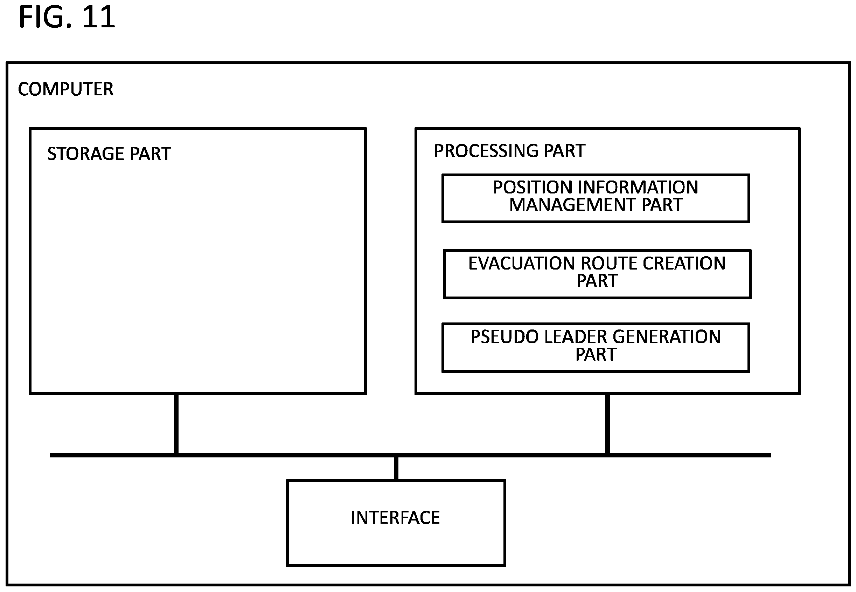

The above described evacuation guidance apparatus may be realized as a computer comprising an interface, a storage part and a processing part as illustrated in Figure 11. The interface has a function for communicating information with the position detection apparatuses, the disaster detection apparatus 120 and the performance presentation apparatus. The storage part is an ROM (read only memory), an RAM (random access memory), a cache memory, or the like, and stores a program and the like for controlling entire evacuation guidance apparatus. Particularly, the storage part also stores the above described position information, evacuation route map and evacuation route. The processing part is configured with CPU (Central Processing Unit) and a chip, and reads out the program from the storage part to realize processing modules required for the present invention. Concretely, the position information management part, the evacuation route creation part and the pseudo leader generation part in the evacuation guidance apparatus are realized as the processing modules.

The evacuation route may be appropriately corrected depending on expansion of the disaster. That is, in a case where a disaster is detected by a disaster detection apparatus 120 arranged on a created evacuation route, the evacuation route creation apparatus 130 corrects the evacuation route so that the evacuation route does not overlap with the position of the disaster detection apparatus 120 concerned. In addition, the pseudo leader generation apparatus 140 corrects the direction for leading by the pseudo leader based on the evacuation route corrected by the evacuation route creation apparatus 130.

In addition, under a situation in which persons inside is divided into a plurality of groups, the pseudo leader may be generated for each of groups. That is, the pseudo leader generation apparatus 140 may determine a following group from the position information, who are apart from the header lead by the pseudo leader at a distance of a threshold or more, and generate the pseudo leader in front of a header of the following group. For example, it is considered to detect opening and closing of a door between a room and a passage and a door between a passage and emergency steps/stairs, and recognize a person who passes the door at first as the header upon once of opening of the door and recognize peoples who pass the door until the door is closed as one group. Herein, a senser may be arranged, which detects opening and closing of the door and passing through of peoples, and/or the passing through of peoples may be detected with a camera.

A part or entire of the above example embodiments may be described as the following modes, but not limited thereto.

### (Mode 1)

An evacuation guidance system, comprising:
a position information management apparatus that determines position of persons inside a building and manages the position as position information,
a disaster detection apparatus that detects a disaster under which an evacuation guidance should be provided to the persons inside so as to evacuate them to outside of the building,
an evacuation route creation apparatus that creates an evacuation route for the persons inside based on the position information in a case where the disaster detection apparatus detects a disaster, and
a pseudo leader generation apparatus that generates a pseudo leader in front of the persons inside on the evacuation route based on the position information and the evacuation route.

### (Mode 2)

The evacuation guidance system according to Mode 1, wherein the pseudo leader generation apparatus generates the pseudo leader in front of a heading person on the evacuation route among the persons inside.

### (Mode 3)

The evacuation guidance system according to Mode 2, wherein the pseudo leader generation apparatus generates the pseudo leader in front of the heading person on the evacuation route within a visually recognizable range.

### (Mode 4)

The evacuation guidance system according to Mode 2 or 3, wherein the pseudo leader generation apparatus makes a performance for urging persons other than the heading person among the persons inside to follow the heading person.

### (Mode 5)

An evacuation guidance apparatus, comprising:
a position information management part that determines position of persons inside a building and manages the position as position information,
an evacuation route creation part that creates an evacuation route for the persons inside based on the position information in a case where a disaster is detected, and
a pseudo leader generation part that generates a pseudo leader in front of the persons inside on the evacuation route based on the position information and the evacuation route.

### (Mode 6)

An evacuation guidance method, comprising:
a step of determining position of persons inside a building and managing the position as position information,
a step of creating an evacuation route for the persons inside based on the position information in a case where a disaster is detected, and a step of generating a pseudo leader in front of the persons inside on the evacuation route based on the position information and the evacuation route.

### (Mode 7)

An evacuation guidance program, that causes a computer to implement: a process of determining position of persons inside a building and managing the position as position information,
a process of creating an evacuation route for the persons inside based on the position information in a case where a disaster is detected, and
a process of generating a pseudo leader in front of the persons inside on the evacuation route based on the position information and the evacuation route.

Disclosure of the Patent Literature above is incorporated in the present application by reference thereto, and may be used as a base or a part of the present invention as necessary. The exemplary embodiments or examples may be modified or adjusted within the scope of the entire disclosure of the present invention, inclusive of claims, based on the fundamental technical concept of the invention. In addition, a variety of combinations or selection (including non-selection) of elements disclosed herein, inclusive each element in each claim, each element in each exemplary embodiment or example, each element in each drawing etc., may be made within the context of entire disclosure of the present inventions. That is, the present invention may include a variety of modifications or corrections that may be made by those skilled in the art in accordance with the entire disclosure of the present invention, inclusive of claims, and the technical concept of the present invention. Further, it is regarded as being included in the described matters of the present application to use a part or entire of each of the disclosed matter in the cited Literature in combination with the described matters of the present application as a part of the description of the present invention as necessary and on the basis of the concept of the present invention.

### REFERENCE SIGNS LIST

- 100: evacuation guidance system
- 110: position information management apparatus
- 120: disaster detection apparatus
- 130: evacuation route creation apparatus
- 140: pseudo leader generation apparatus

## Claims

1. An evacuation guidance system, comprising:
a position information management apparatus that determines position of persons inside a building and manages the position as position information,
a disaster detection apparatus that detects a disaster under which an evacuation guidance should be provided to the persons inside so as to evacuate them to outside of the building,
an evacuation route creation apparatus that creates an evacuation route for the persons inside based on the position information in a case where the disaster detection apparatus detects a disaster, and
a pseudo leader generation apparatus that generates a pseudo leader in front of the persons inside on the evacuation route based on the position information and the evacuation route.

2. The evacuation guidance system according to Claim 1, wherein
the pseudo leader generation apparatus generates the pseudo leader in front of a heading person on the evacuation route among the persons inside.

3. The evacuation guidance system according to Claim 2, wherein
the pseudo leader generation apparatus generates the pseudo leader in front of the heading person on the evacuation route within a visually recognizable range.

4. The evacuation guidance system according to Claim 2 or 3, wherein
the pseudo leader generation apparatus makes a performance for urging persons other than the heading person among the persons inside to follow the heading person.

5. An evacuation guidance apparatus, comprising:
a position information management part that determines position of persons inside a building and manages the position as position information,
an evacuation route creation part that creates an evacuation route for the persons inside based on the position information in a case where a disaster is detected, and
a pseudo leader generation part that generates a pseudo leader in front of the persons inside on the evacuation route based on the position information and the evacuation route.

6. An evacuation guidance method, comprising:
a step of determining position of persons inside a building and managing the position as position information,
a step of creating an evacuation route for the persons inside based on the position information in a case where a disaster is detected, and
a step of generating a pseudo leader in front of the persons inside on the evacuation route based on the position information and the evacuation route.

7. An evacuation guidance program, that causes a computer to implement:
a process of determining position of persons inside a building and managing the position as position information,
a process of creating an evacuation route for the persons inside based on the position information in a case where a disaster is detected, and
a process of generating a pseudo leader in front of the persons inside on the evacuation route based on the position information and the evacuation route.
